# EUROPEAN PATENT APPLICATION

(11) **EP 4 373 185 A1**
(43) Date of publication of application: **22.05.2024**
(21) Application number: 22841460.3
(22) Date of filing: 14.07.2022
(51) Int. Cl.: H04W 72/04

(54) **CONFIGURATION METHOD FOR MEASUREMENT GAP SHARING RULE, AND APPARATUS**

(30) Priority: 16.07.2021 CN 202110805390
(71) Applicant: Vivo Mobile Communication Co., Ltd., Dongguan, Guangdong 523863 (CN)
(72) Inventor: WEI, Xusheng, Dongguan, Guangdong 523863 (CN)
(74) Representative: Lavoix
(86) International application number: PCT/CN2022/105705
(87) International publication number: WO 2023/284827

(57) **Abstract**

This application discloses a configuration method and apparatus for a measurement gap sharing rule, pertains to the technical field of wireless communication, and the configuration method for a measurement gap sharing rule in the embodiments of this application includes: receiving, by a terminal, configuration signaling sent by a network side device, where the configuration signaling includes a correspondence between at least one measurement gap pattern among a plurality of measurement gap patterns configured for the terminal and a measurement gap sharing rule; or receiving, by a terminal, configuration signaling sent by a network side device, where the configuration signaling is used to indicate an identity of a target measurement gap sharing rule corresponding to a measurement gap pattern configured for the terminal, and the identity of the target measurement gap sharing rule is able to indicate a proportion of a measurement gap occupied by a measurement object in inter-frequency measurement and a proportion of a measurement gap occupied by a measurement object in inter-RAT measurement.

## Description

### CROSS-REFERENCE TO RELATED APPLICATIONS

This application claims priority to Chinese Patent Application No. 202110805390.X, filed on July 16, 2021 in China, which is incorporated herein by reference in its entirety.

### TECHNICAL FIELD

This application pertains to the technical field of wireless communication, and in particular, to a configuration method and apparatus for a measurement gap sharing rule.

### BACKGROUND

Radio resource management (Radio Resource Management, RRM) conformance evaluation mainly tests whether the terminal meets the minimum requirements defined by the standard in terms of performance, and the conformance test is of great significance for ensuring the interconnection of networks and the user experience of terminals. In RRM measurement, for inter-frequency (inter-frequency) measurement and inter-RAT (inter-RAT) measurement, because inter-frequency and inter-RAT are different from a serving cell in the frequency point, it is impossible to use one radio frequency chain (Radio Frequency chain, RF chain) to simultaneously complete the work of receiving and sending signals in the service cell and inter-frequency point measurement. Therefore, it is required to introduce a measurement gap (gap) for measurement when a radio frequency chain (RF chain) of a terminal is limited.

In the NR (Release 15/16, Rel-15/16) release, same as Long Term Evolution (Long Term Evolution, LTE), one terminal can only be configured with one measurement gap pattern (gap pattern). For NR, complexity of a measurement object in property is much higher than that of LTE, such as positioning information, channel state information reference signal (Channel State Information Reference Signal, CSI-RS), and the like. The increase of complexity in time domain is expressed as the increase of non-periodic measurement objects (Measurement Object, MO), or a plurality of MOs have different periods and offsets (offset), and the increase of complexity in frequency domain is expressed as that possible positions of a center frequency point of the measurement object are greatly increased. At present, to ensure that measurement based on a measurement gap is more efficient, it is hoped that a plurality of MOs (such as a plurality of synchronization signal blocks (Synchronization Signal and PBCH block, SSB)) will be aligned as much as possible in the time domain, which will reduce flexibility of network configuration. To make the network configuration more flexible and reduce the overhead of the measurement gap, in Release 17 (Release 17, R17), it is planned to introduce a mechanism of configuring a plurality of measurement gap patterns for a UE. At present, there is no solution to how to provide a measurement gap sharing (gap sharing) rule for the plurality of configured gap patterns.

In addition, in R15/R16, the measurement gap sharing rule only specifies the following two scenarios:
a. opportunities for each measurement object to use the measurement gap are equally split among measurement objects; and
b. for intra-frequency (intra-frequency) and other measurement objects, opportunities are split in a specified proportion.

In the solutions of the R15/R16, there is no proportional distribution between inter-frequency (inter-frequency) measurement and inter-RAT (inter-RAT) measurement (in this case, the opportunities are equally split among all measurement objects by default), that is, there is no priority between inter-frequency measurement and inter-RAT measurement.

### SUMMARY

Embodiments of this application provide a configuration method and apparatus for a measurement gap sharing rule, which can solve the problem of how to provide, when a plurality of gap patterns are configured for a terminal, a measurement gap sharing rule for the plurality of configured gap patterns, or solve the problem that the existing measurement gap sharing does not reflect proportional distribution between inter-frequency measurement and inter-RAT measurement.

According to a first aspect, a configuration method for a measurement gap sharing rule is provided, including:
receiving, by a terminal, configuration signaling sent by a network side device, where the configuration signaling includes a correspondence between at least one measurement gap pattern among a plurality of measurement gap patterns configured for the terminal and a measurement gap sharing rule.

According to a second aspect, a configuration method for a measurement gap sharing rule is provided, including:
sending, by a network side device, configuration signaling to a terminal, where the configuration signaling includes a correspondence between at least one measurement gap pattern among a plurality of measurement gap patterns configured for the terminal and a measurement gap sharing rule.

According to a third aspect, a configuration method for a measurement gap sharing rule is provided, including:
receiving, by a terminal, configuration signaling sent by a network side device, where the configuration signaling is used to indicate an identity of a target measurement gap sharing rule corresponding to a measurement gap pattern configured for the terminal, and the identity of the target measurement gap sharing rule is able to indicate a proportion of a measurement gap occupied by a measurement object in inter-frequency measurement and a proportion of a measurement gap occupied by a measurement object in inter-RAT measurement.

According to a fourth aspect, a configuration method for a measurement gap sharing rule is provided, including:
sending, by a network side device, configuration signaling to a terminal, where the configuration signaling is used to indicate an identity of a target measurement gap sharing rule corresponding to a measurement gap pattern configured for the terminal, and the identity of the target measurement gap sharing rule is able to indicate a proportion of a measurement gap occupied by a measurement object in inter-frequency measurement and a proportion of a measurement gap occupied by a measurement object in inter-RAT measurement.

According to a fifth aspect, a configuration apparatus for a measurement gap sharing rule is provided, including:
a receiving module, configured to receive configuration signaling sent by a network side device, where the configuration signaling includes a correspondence between at least one measurement gap pattern among a plurality of measurement gap patterns configured for the terminal and a measurement gap sharing rule.

According to a sixth aspect, a configuration apparatus for a measurement gap sharing rule is provided, including:
a sending module, configured to send configuration signaling to a terminal, where the configuration signaling includes a correspondence between at least one measurement gap pattern among a plurality of measurement gap patterns configured for the terminal and a measurement gap sharing rule.

According to a seventh aspect, a configuration apparatus for a measurement gap sharing rule is provided, including:
a receiving module, configured to receive configuration signaling sent by a network side device, where the configuration signaling is used to indicate an identity of a target measurement gap sharing rule corresponding to a measurement gap pattern configured for the terminal, and the identity of the target measurement gap sharing rule is able to indicate a proportion of a measurement gap occupied by a measurement object in inter-frequency measurement and a proportion of a measurement gap occupied by a measurement object in inter-RAT measurement.

According to an eighth aspect, a configuration apparatus for a measurement gap sharing rule is provided, including:
a sending module, configured to send configuration signaling to a terminal, where the configuration signaling is used to indicate an identity of a target measurement gap sharing rule corresponding to a measurement gap pattern configured for the terminal, and the identity of the target measurement gap sharing rule is able to indicate a proportion of a measurement gap occupied by a measurement object in inter-frequency measurement and a proportion of a measurement gap occupied by a measurement object in inter-RAT measurement.

According to a ninth aspect, a terminal is provided. The terminal includes a processor, a memory, and a program or an instruction stored in the memory and executable on the processor, where the program or the instruction is executed by the processor to implement steps of the method according to the first aspect or the third aspect.

According to a tenth aspect, a terminal is provided, including a processor and a communications interface, where the communications interface is configured to receive configuration signaling sent by a network side device, and the configuration signaling includes a correspondence between at least one measurement gap pattern among a plurality of measurement gap patterns configured for the terminal and a measurement gap sharing rule; or the communications interface is configured to receive configuration signaling sent by a network side device, where the configuration signaling is used to indicate an identity of a target measurement gap sharing rule corresponding to a measurement gap pattern configured for the terminal, and the identity of the target measurement gap sharing rule is able to indicate a proportion of a measurement gap occupied by a measurement object in inter-frequency measurement and a proportion of a measurement gap occupied by a measurement object in inter-RAT measurement.

According to an eleventh aspect, a network side device is provided. The network side device includes a processor, a memory, and a program or an instruction stored in the memory and executable on the processor, where the program or the instruction is executed by the processor to implement steps of the method according to the second aspect or the fourth aspect.

According to a twelfth aspect, a network side device is provided, including a processor and a communications interface, where the communications interface is configured to send configuration signaling to a terminal, and the configuration signaling includes a correspondence between at least one measurement gap pattern among a plurality of measurement gap patterns configured for the terminal and a measurement gap sharing rule; or the communications interface is configured to send configuration signaling to a terminal, where the configuration signaling is used to indicate an identity of a target measurement gap sharing rule corresponding to a measurement gap pattern configured for the terminal, and the identity of the target measurement gap sharing rule is able to indicate a proportion of a measurement gap occupied by a measurement object in inter-frequency measurement and a proportion of a measurement gap occupied by a measurement object in inter-RAT measurement.

According to a thirteenth aspect, a readable storage medium is provided. The readable storage medium stores a program or an instruction, and when the program or the instruction is executed by a processor, steps of the method according to the first aspect, the second aspect, the third aspect, or the fourth aspect are implemented.

According to a fourteenth aspect, a chip is provided. The chip includes a processor and a communications interface, the communications interface is coupled to the processor, and the processor is configured to run a program or an instruction to implement the method according to the first aspect, the second aspect, the third aspect, or the fourth aspect.

According to a fifteenth aspect, a computer program/program product is provided. The computer program/program product is stored in a non-volatile storage medium, and the program/program product is executed by at least one processor to implement steps of the configuration method for a measurement gap sharing rule according to the first aspect, the second aspect, the third aspect, or the fourth aspect.

In this embodiment of this application, when the plurality of measurement gap patterns are configured for the terminal, the configuration signaling is used to configure, for the terminal, the correspondence between at least one measurement gap pattern among a plurality of measurement gap patterns of the terminal and the measurement gap sharing rule, so as to achieve accurate RRM measurement.

Alternatively, the terminal is configured with the identity of the target measurement gap sharing rule corresponding to the measurement gap pattern. The identity of the target measurement gap sharing rule is able to indicate a proportion of a measurement gap occupied by a measurement object in inter-frequency measurement and a proportion of a measurement gap occupied by a measurement object in inter-RAT measurement, so that proportion distribution between the inter-frequency measurement and the inter-RAT measurement can be learned of, and accurate RRM measurement can be realized.

### BRIEF DESCRIPTION OF DRAWINGS

FIG 1 is a block diagram of a wireless communications system to which embodiments of this application can be applied;
FIG 2 is a schematic flowchart of a configuration method for a measurement gap sharing rule implemented by a terminal according to an embodiment of this application;
FIG 3 is a schematic flowchart of a configuration method for a measurement gap sharing rule implemented by a network side device according to an embodiment of this application;
FIG 4 is a schematic flowchart of a configuration method for a measurement gap sharing rule implemented by a terminal according to another embodiment of this application;
FIG 5 is a schematic flowchart of a configuration method for a measurement gap sharing rule implemented by a network side device according to another embodiment of this application;
FIG 6 is a schematic diagram of a structure of a configuration apparatus for a measurement gap sharing rule according to an embodiment of this application;
FIG 7 is a schematic diagram of a structure of a configuration apparatus for a measurement gap sharing rule according to another embodiment of this application;
FIG 8 is a schematic diagram of a structure of a configuration apparatus for a measurement gap sharing rule according to still another embodiment of this application;
FIG 9 is a schematic diagram of a structure of a configuration apparatus for a measurement gap sharing rule according to yet another embodiment of this application;
FIG 10 is a schematic diagram of a structure of a communications device according to an embodiment of this application;
FIG 11 is a schematic diagram of a hardware structure of a terminal according to an embodiment of this application; and
FIG 12 is a schematic diagram of a hardware structure of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. A New Radio (New Radio, NR) system is described below as an example, and the term NR is used in most of the descriptions, but these technologies can also be used in an application other than an application of the NR system, for example, a 6^{th} generation (6^{th} Generation, 6G) communications system.

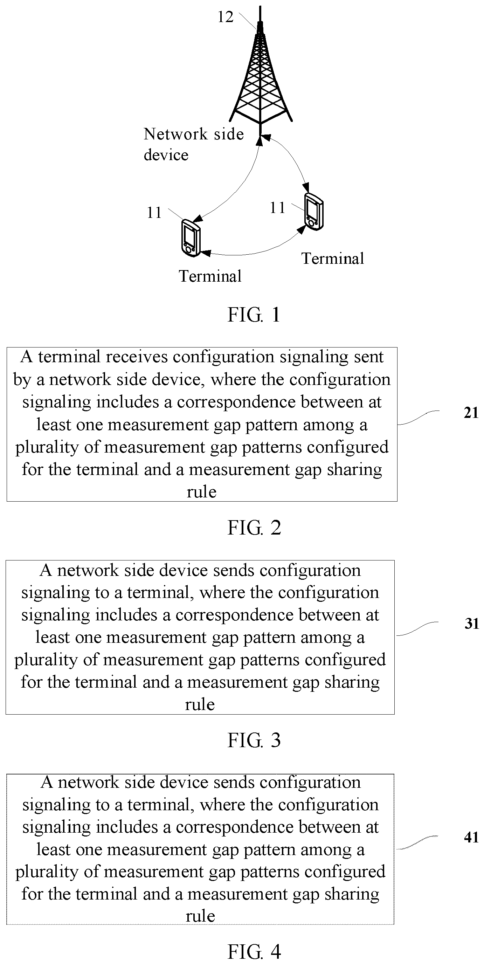

FIG 1 is a block diagram of a wireless communications system to which embodiments of this application can be applied. The wireless communications system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (Vehicle User Equipment, VUE), or pedestrian user equipment (Pedestrian User Equipment, PUE). The wearable device includes a smartwatch, a bracelet, a headset, glasses, and the like. It should be noted that a specific type of the terminal 11 is not limited in the embodiments of this application. The network side device 12 may be a base station or a core network. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a wireless local area network (Wireless Local Area Network, WLAN) access point, a wireless fidelity (Wireless Fidelity, Wi-Fi) node, a transmitting receiving point (Transmitting Receiving Point, TRP), or another appropriate term in the art. As long as the same technical effect is achieved, the base station is not limited to a specific technical term. It should be noted that the base station in the NR system is taken only as an example in the embodiments of this application, but a specific type of the base station is not limited.

With reference to the accompanying drawings, a configuration method and apparatus for a measurement gap sharing rule provided in the embodiments of this application is described in detail by using some embodiments and application scenarios thereof.

To solve the problem of how to provide, when a plurality of gap patterns are configured for a terminal, a measurement gap sharing rule for the plurality of configured gap patterns, referring to FIG 2, an embodiment of this application provides a configuration method for a measurement gap sharing rule, and the method includes the following step:
Step 21: A terminal receives configuration signaling sent by a network side device, where the configuration signaling includes a correspondence between at least one measurement gap pattern among a plurality of measurement gap patterns configured for the terminal and a measurement gap sharing rule.

In this embodiment of this application, when the plurality of measurement gap patterns are configured for the terminal, the configuration signaling is used to configure, for the terminal, the correspondence between at least one measurement gap pattern among a plurality of measurement gap patterns of the terminal and the measurement gap sharing rule, so as to achieve accurate RRM measurement.

Due to limitation of single configuration of a measurement gap pattern in R15/16 on terminal measurement, a mechanism supporting a plurality of measurement gap patterns is introduced in R17. Logically, it is required to group all measurement objects that need to use a measurement gap. For example, in a case of configuring two measurement gap patterns, some measurement objects use a gap pattern 1 for measurement, and the rest of measurement objects use a gap pattern 2 for measurement, which can better ensure the gain of introducing a plurality of measurement gap patterns. In this embodiment of this application, each measurement gap pattern can correspond to one or more measurement objects.

In some embodiments of this application, optionally, in the configuration signaling, the measurement gap pattern and the measurement gap sharing rule are in a one-to-one correspondence.

For example, the configuration signaling includes the following content:
a correspondence between a measurement gap pattern A and a measurement gap sharing rule 1;
a correspondence between a measurement gap pattern B and a measurement gap sharing rule 2; and
a correspondence between a measurement gap pattern C and a measurement gap sharing rule 1.

That is, the configuration signaling may include one or more correspondences, and measurement gap sharing rules corresponding to different measurement gap patterns may be the same or different.

In some embodiments of this application, optionally, among the plurality of measurement gap patterns configured for the terminal, different measurement gap patterns correspond to different measurement gap sharing rules.

In some embodiments of this application, optionally, the configuration signaling includes a correspondence between one measurement gap pattern and one measurement gap sharing rule. That is, one configuration signaling can be configured separately for each measurement gap pattern configured for the terminal, that is, one configuration signaling corresponds to one measurement gap pattern.

Content in the configuration signaling can be as follows:

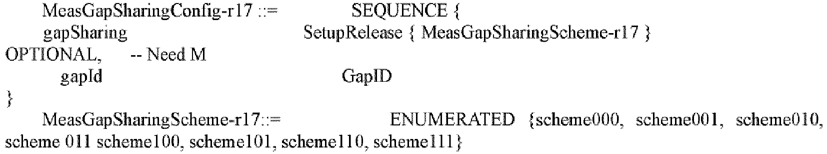

For example, the configuration signaling includes the following content: a correspondence between a measurement gap pattern A and a measurement gap sharing rule 1.

In some embodiments of this application, optionally, the configuration signaling includes a correspondence between at least two measurement gap patterns and at least two measurement gap sharing rules.

For example, the configuration signaling includes the following content:
a correspondence between a measurement gap pattern A and a measurement gap sharing rule 1;
a correspondence between a measurement gap pattern B and a measurement gap sharing rule 2; and
a correspondence between a measurement gap pattern C and a measurement gap sharing rule 1.

In some embodiments of this application, optionally, the at least two measurement gap patterns form a first list, the at least two measurement gap sharing rules form a second list, and the at least two measurement gap patterns in the first list are in a one-to-one correspondence with the at least two measurement gap sharing rules in the second list.

For example, the configuration signaling includes the following content:
First list: a measurement gap pattern A, a measurement gap pattern B, and a measurement gap pattern C; and
Second list: a measurement gap sharing rule 1, a measurement gap sharing rule 2, and a measurement gap sharing rule 3.

The measurement gap pattern A corresponds to the measurement gap sharing rule 1, the measurement gap pattern B corresponds to the measurement gap sharing rule 2, and the measurement gap pattern C corresponds to the measurement gap sharing rule 3.

In some embodiments of this application, optionally, in the configuration signaling, the measurement gap pattern and the measurement gap sharing rule are in a many-to-one correspondence. That is, if a plurality of measurement gap patterns correspond to one measurement gap sharing rule, one measurement gap sharing rule can be configured simultaneously for the plurality of measurement gap patterns through one configuration signaling.

For example, the configuration signaling includes the following content: a correspondence among the measurement gap pattern A, the measurement gap pattern B, and the measurement gap sharing rule 1.

In some embodiments of this application, optionally, the configuration signaling further includes configuration information of the terminal for supporting per UE measurement gap and/or per frequency (Frequency, FR) measurement gap. That is, the configuration signaling is configuration signaling that is used to configure the terminal to support per UE measurement gap and/or per FR measurement gap. Optionally, the configuration signaling is MeasGapConfig configuration signaling.

Content in the configuration signaling can be as follows:

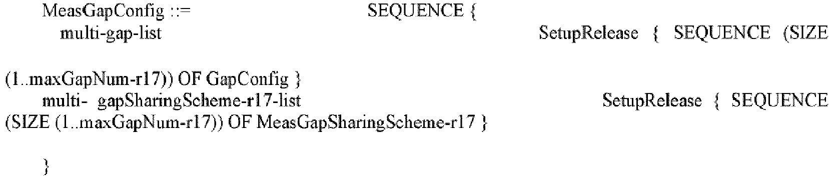

In some embodiments of this application, optionally, the configuration signaling further includes information about a plurality of measurement gap patterns configured for the terminal. That is, the configuration signaling is configuration signaling that is used to configure information about the measurement gap pattern for the terminal. Optionally, the configuration signaling is gapconfig configuration signaling.

Content in the configuration signaling can be as follows:

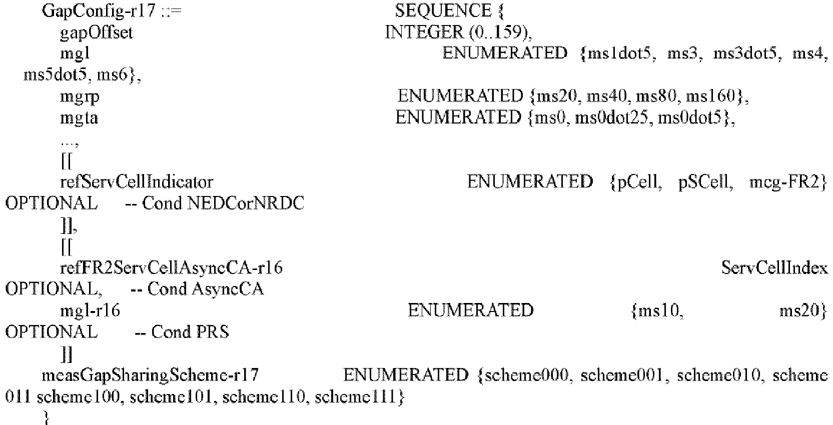

In this embodiment of this application, in the configuration signaling, the correspondence between the measurement gap pattern and the measurement gap sharing rule may be a correspondence between an identity (Identity, ID) of the measurement gap pattern and an identity of the measurement gap sharing rule.

Referring to FIG 3, an embodiment of this application further provides a configuration method for a measurement gap sharing rule, including the following step:
Step 31: A network side device sends configuration signaling to a terminal, where the configuration signaling includes a correspondence between at least one measurement gap pattern among a plurality of measurement gap patterns configured for the terminal and a measurement gap sharing rule.

In this embodiment of this application, when the plurality of measurement gap patterns are configured for the terminal, the configuration signaling is used to configure, for the terminal, the correspondence between at least one measurement gap pattern among a plurality of measurement gap patterns of the terminal and the measurement gap sharing rule, so as to achieve accurate RRM measurement.

Optionally, in the configuration signaling, the measurement gap pattern and the measurement gap sharing rule are in a one-to-one correspondence.

Optionally, among the plurality of measurement gap patterns configured for the terminal, different measurement gap patterns correspond to different measurement gap sharing rules.

Optionally, the configuration signaling includes a correspondence between one measurement gap pattern and one measurement gap sharing rule.

Optionally, the configuration signaling includes a correspondence between at least two measurement gap patterns and at least two measurement gap sharing rules.

Optionally, the at least two measurement gap patterns form a first list, the at least two measurement gap sharing rules form a second list, and the at least two measurement gap patterns in the first list are in a one-to-one correspondence with the at least two measurement gap sharing rules in the second list.

Optionally, in the configuration signaling, the measurement gap pattern and the measurement gap sharing rule are in a many-to-one correspondence.

Optionally, the configuration signaling further includes configuration information of the terminal for supporting per UE measurement gap and/or per FR measurement gap. Further, optionally, the configuration signaling is MeasGapConfig configuration signaling.

Optionally, the configuration signaling further includes information about a plurality of measurement gap patterns configured for the terminal. Further, optionally, the configuration signaling is gapconfig configuration signaling.

To solve the problem that the existing measurement gap sharing does not reflect proportional distribution between inter-frequency measurement and inter-RAT measurement, referring to FIG 4, an embodiment of this application provides a configuration method for a measurement gap sharing rule, including the following step:
Step 41: A terminal receives configuration signaling sent by a network side device, where the configuration signaling is used to indicate an identity of a target measurement gap sharing rule corresponding to a measurement gap pattern configured for the terminal, and the identity of the target measurement gap sharing rule is able to indicate a proportion of a measurement gap occupied by a measurement object in inter-frequency measurement and a proportion of a measurement gap occupied by a measurement object in inter-RAT measurement.

In this embodiment of this application, the terminal is configured with the identity of the target measurement gap sharing rule corresponding to the measurement gap pattern. The identity of the target measurement gap sharing rule is able to indicate a proportion of a measurement gap occupied by a measurement object in inter-frequency measurement and a proportion of a measurement gap occupied by a measurement object in inter-RAT measurement, so that proportion distribution between the inter-frequency measurement and the inter-RAT measurement can be learned of, and accurate RRM measurement can be realized.

In some embodiments of this application, optionally, the identity of the target measurement gap sharing rule is represented by 2-bit information, and after the receiving, by a terminal, configuration signaling sent by a network side device, the method further includes:
querying, by the terminal, a first table based on the 2-bit information, to determine proportional distribution information corresponding to the 2-bit information, where
the first table includes a plurality of measurement gap sharing rule identities and proportional distribution information corresponding to each of the measurement gap sharing rule identities, the proportional distribution information includes a proportion of a measurement gap occupied by a measurement object in intra-frequency measurement, a proportion of a measurement gap occupied by a measurement object in inter-frequency measurement, and a proportion of a measurement gap occupied by a measurement object in inter-RAT measurement, in at least one piece of proportional distribution information, the proportion of a measurement gap occupied by a measurement object in intra-frequency measurement is X%, the proportion of a measurement gap occupied by a measurement object in inter-frequency measurement is M/(K+M)*(1-X%), and the proportion of a measurement gap occupied by a measurement object in inter-RAT measurement is K/(K+M)*(1-X%), K is the number of measurement objects in the inter-RAT measurement, and M is the number of measurement objects in the inter-frequency measurement.

For example, a format of a first table may be as follows:

**Table 1 First Table**

| **measGapSharingScheme (Measurement Gap Sharing Rule Identity)** | **Value of X (%) (Proportion of Intra-frequency Measurement)** | **Inter-frequency (Proportion of Inter-frequency Measurement)** | **Inter-RAT (Proportion of Inter-RAT Measurement)** |
|---|---|---|---|
| '00' | Equal splitting (Equal splitting) | Equal splitting (Equal splitting) | Equal splitting (Equal splitting) |
| | | M/(N+K+M) | K/(N+K+M) |
| '01' | 25 | M/(K+M)*75% | K/(K+M)*75% |
| | | 37.5% when K=M | 37.5% when K=M |
| '10' | 50 | M/(K+M)*50% | K/(K+M)*50% |
| | | 25% when K=M | 25% when K=M |
| '11' | 75 | M/(K+M)*25% | K/(K+M)*25% |
| | | 12.5% when K=M | 12.5% when K=M |

It can be seen from Table 1 that, when the measurement gap sharing rule identity is '01', '10', or '11', the proportion of a measurement gap occupied by a measurement object in intra-frequency measurement is X%, the proportion of a measurement gap occupied by a measurement object in inter-frequency measurement is M/(K+M)*(1-X%), and the proportion of a measurement gap occupied by a measurement object in inter-RAT measurement is K/(K+M)*(1-X%). When the measurement gap sharing rule identity is '00', measurement types of measurement objects are not distinguished, and measurement gaps are equally split among measurement objects.

In some embodiments of this application, optionally, the identity of the target measurement gap sharing rule is represented by 3-bit information, and after the receiving, by a terminal, configuration signaling sent by a network side device, the method further includes:
querying, by the terminal, a second table based on the 3-bit information, to determine proportional distribution information corresponding to the 3-bit information, where
the second table includes a plurality of measurement gap sharing rule identities and proportional distribution information corresponding to each of the measurement gap sharing rule identities, and the proportional distribution information includes a proportion of a measurement gap occupied by a measurement object in intra-frequency measurement, a proportion of a measurement gap occupied by a measurement object in inter-frequency measurement, and a proportion of a measurement gap occupied by a measurement object in inter-RAT measurement.

For example, a format of a second table may be as follows:

**Table 2 Second Table**

| **measGapSharingScheme-r17 (Measurement Gap Sharing Rule Identity)** | **Proportion of Intra-frequency Measurement (R17)** | **Proportion of Inter-frequency Measurement (R17)** | **Proportion of Inter-RAT Measurement (R17)** |
|---|---|---|---|
| '000' | Equal splitting (Equal splitting) | Equal splitting (Equal splitting) | Equal splitting (Equal splitting) |
| '001' | 25 | 62.5 | 12.5 |
| '010' | 25 | 37.5 | 37.5 |
| '011' | 25 | 12.5 | 62.5 |
| '100' | 50 | 37.5 | 12.5 |
| '101' | 50 | 25 | 25 |
| '110' | 50 | 12.5 | 37.5 |
| '111' | 75 | 12.5 | 12.5 |

It can be seen from Table 2 that, when the measurement gap sharing rule identity is '001', '010', '011', '100' '101', ' 110', or '111', the table includes the proportion of a measurement gap occupied by a measurement object in intra-frequency measurement, inter-frequency measurement, and inter-RAT measurement. When the measurement gap sharing rule identity is '000', measurement types of measurement objects are not distinguished, and measurement gaps are equally split among measurement objects.

In some embodiments of this application, optionally, the identity of the target measurement gap sharing rule is represented by two pieces of 2-bit information; and after the receiving, by a terminal, configuration signaling sent by a network side device, the method further includes:
querying, by the terminal, a third table based on a first piece of 2-bit information, to determine a proportion of a measurement gap occupied by a measurement object in intra-frequency measurement; and
querying, by the terminal, a fourth table based on a second piece of 2-bit information, to determine a proportion of a measurement gap occupied by a measurement object in inter-frequency measurement and a proportion of a measurement gap occupied by a measurement object in inter-RAT measurement, where
the third table includes a plurality of measurement gap sharing rule identities and proportional distribution information corresponding to each of the measurement gap sharing rule identities, and the proportional distribution information includes a proportion of a measurement gap occupied by a measurement object in intra-frequency measurement; and
the fourth table includes a plurality of measurement gap sharing rule identities and proportional distribution information corresponding to each of the measurement gap sharing rule identities, and the proportional distribution information includes a proportion of a measurement gap occupied by a measurement object in inter-frequency measurement and a proportion of a measurement gap occupied by a measurement object in inter-RAT measurement.

For example, a format of a third table may be as follows:

**Table 3 Third Table**

| **measGapSharingScheme (Measurement Gap Sharing Rule Identity)** | **Proportion of Intra-frequency Measurement** |
|---|---|
| '00' | Equal splitting (Equal splitting) |
| '01' | 25 |
| '10' | 50 |
| '11' | 75 |

For example, a format of a fourth table may be as follows:

**Table 4 Fourth Table**

| **measGapSharingScheme-2** | **Proportion of Inter-frequency (inter-frequency)** |
|---|---|
| **(Measurement Gap Sharing Rule Identity)** | **Measurement and Proportion of Inter-RAT (inter-RAT)** |
| | **Measurement** |
| '00' | Equal splitting (Equal splitting) |
| '01' | 25 inter-frequency |
| | 75 inter-RAT |
| '10' | 50 inter-frequency |
| | 50 inter-RAT |
| '11' | 75 inter-frequency |
| | 25 inter-RAT |

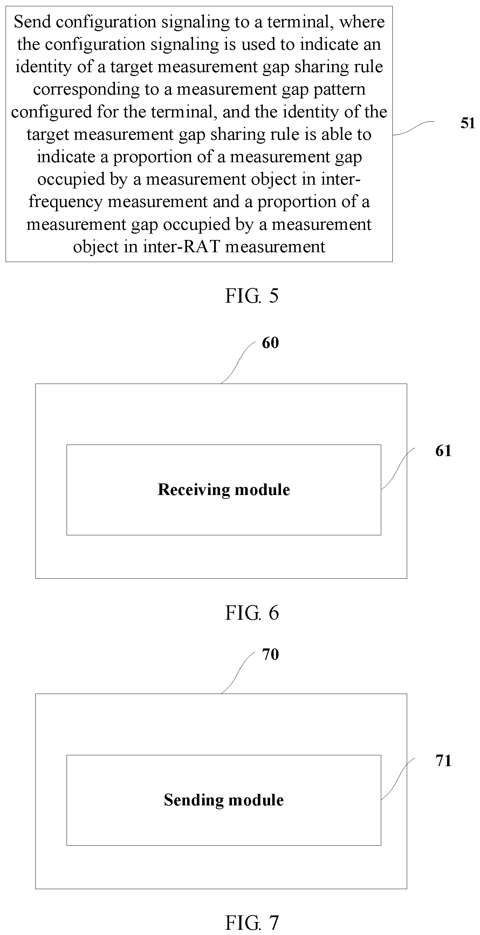

Referring to FIG 5, an embodiment of this application further provides a configuration method for a measurement gap sharing rule, including the following step:

Step 51: A network side device sends configuration signaling to a terminal, where the configuration signaling is used to indicate an identity of a target measurement gap sharing rule corresponding to a measurement gap pattern configured for the terminal, and the identity of the target measurement gap sharing rule is able to indicate a proportion of a measurement gap occupied by a measurement object in inter-frequency measurement and a proportion of a measurement gap occupied by a measurement object in inter-RAT measurement.

In this embodiment of this application, the terminal is configured with the identity of the target measurement gap sharing rule corresponding to the measurement gap pattern. The identity of the target measurement gap sharing rule is able to indicate a proportion of a measurement gap occupied by a measurement object in inter-frequency measurement and a proportion of a measurement gap occupied by a measurement object in inter-RAT measurement, so that proportion distribution between the inter-frequency measurement and the inter-RAT measurement can be learned of, and accurate RRM measurement can be realized.

Optionally, the identity of the target measurement gap sharing rule is represented by 2-bit information, and the 2-bit information is used to query a first table, where
the first table includes a plurality of measurement gap sharing rule identities and proportional distribution information corresponding to each of the measurement gap sharing rule identities, the proportional distribution information includes a proportion of a measurement gap occupied by a measurement object in intra-frequency measurement, a proportion of a measurement gap occupied by a measurement object in inter-frequency measurement, and a proportion of a measurement gap occupied by a measurement object in inter-RAT measurement, in at least one piece of proportional distribution information, the proportion of a measurement gap occupied by a measurement object in intra-frequency measurement is X%, the proportion of a measurement gap occupied by a measurement object in inter-frequency measurement is M/(K+M)*(1-X%), and the proportion of a measurement gap occupied by a measurement object in inter-RAT measurement is K/(K+M)*(1-X%), K is the number of measurement objects in the inter-RAT measurement, and M is the number of measurement objects in the inter-frequency measurement.

Optionally, the identity of the target measurement gap sharing rule is represented by 3-bit information, and the 3-bit information is used to query a second table, where
the second table includes a plurality of measurement gap sharing rule identities and proportional distribution information corresponding to each of the measurement gap sharing rule identities, and the proportional distribution information includes a proportion of a measurement gap occupied by a measurement object in intra-frequency measurement, a proportion of a measurement gap occupied by a measurement object in inter-frequency measurement, and a proportion of a measurement gap occupied by a measurement object in inter-RAT measurement.

Optionally, the identity of the target measurement gap sharing rule is represented by two pieces of 2-bit information;
the first piece of 2-bit information is used to query a third table, the third table includes a plurality of measurement gap sharing rule identities and proportional distribution information corresponding to each of the measurement gap sharing rule identities, and the proportional distribution information includes a proportion of a measurement gap occupied by a measurement object in intra-frequency measurement; and
the second piece of 2-bit information is used to query a fourth table, the fourth table includes a plurality of measurement gap sharing rule identities and proportional distribution information corresponding to each of the measurement gap sharing rule identities, and the proportional distribution information includes a proportion of a measurement gap occupied by a measurement object in inter-frequency measurement and a proportion of a measurement gap occupied by a measurement object in inter-RAT measurement.

It should be noted that an execution subject of the configuration method for a measurement gap sharing rule provided in this embodiment of this application may be a configuration apparatus for a measurement gap sharing rule, or a control module in the configuration apparatus for a measurement gap sharing rule for executing the configuration method for a measurement gap sharing rule. In this embodiment of this application, an example in which the configuration method for a measurement gap sharing rule is implemented by the configuration apparatus for a measurement gap sharing rule is used to describe the configuration apparatus for a measurement gap sharing rule provided in this embodiment of this application.

Referring to FIG 6, an embodiment of this application further provides a configuration apparatus 60 for a measurement gap sharing rule, including:
a receiving module 61, configured to receive configuration signaling sent by a network side device, where the configuration signaling includes a correspondence between at least one measurement gap pattern among a plurality of measurement gap patterns configured for the terminal and a measurement gap sharing rule.

Optionally, in the configuration signaling, the measurement gap pattern and the measurement gap sharing rule are in a one-to-one correspondence.

Optionally, among the plurality of measurement gap patterns configured for the terminal, different measurement gap patterns correspond to different measurement gap sharing rules.

Optionally, the configuration signaling includes a correspondence between one measurement gap pattern and one measurement gap sharing rule.

Optionally, the configuration signaling includes a correspondence between at least two measurement gap patterns and at least two measurement gap sharing rules.

Optionally, the at least two measurement gap patterns form a first list, the at least two measurement gap sharing rules form a second list, and the at least two measurement gap patterns in the first list are in a one-to-one correspondence with the at least two measurement gap sharing rules in the second list.

Optionally, in the configuration signaling, the measurement gap pattern and the measurement gap sharing rule are in a many-to-one correspondence.

Optionally, the configuration signaling further includes configuration information of the terminal for supporting per UE measurement gap and/or per FR measurement gap.

Optionally, the configuration signaling is MeasGapConfig configuration signaling.

Optionally, the configuration signaling further includes information about a plurality of measurement gap patterns configured for the terminal.

Optionally, the configuration signaling is gapconfig configuration signaling.

The configuration apparatus for a measurement gap sharing rule in this embodiment of this application may be an apparatus or an apparatus or electronic device with an operating system, or may be a component, an integrated circuit, or a chip in a terminal. The apparatus or electronic device may be a mobile terminal, or a non-mobile terminal. For example, the mobile terminal may include but is not limited to the foregoing listed types of terminals 11. The non-mobile terminal may be a server, a network attached storage (Network Attached Storage, NAS), a personal computer (personal computer, PC), a television (television, TV), a teller machine, or a self-service machine. This is not specifically limited in this embodiment of this application.

The configuration apparatus for a measurement gap sharing rule provided in this embodiment of this application can implement the processes implemented in the method embodiment of FIG 2, and a same technical effect can be achieved. To avoid repetition, details are not described herein again.

Referring to FIG 7, an embodiment of this application further provides a configuration apparatus 70 for a measurement gap sharing rule, including:
a sending module 71, configured to send configuration signaling to a terminal, where the configuration signaling includes a correspondence between at least one measurement gap pattern among a plurality of measurement gap patterns configured for the terminal and a measurement gap sharing rule.

Optionally, in the configuration signaling, the measurement gap pattern and the measurement gap sharing rule are in a one-to-one correspondence.

Optionally, among the plurality of measurement gap patterns configured for the terminal, different measurement gap patterns correspond to different measurement gap sharing rules.

Optionally, the configuration signaling includes a correspondence between one measurement gap pattern and one measurement gap sharing rule.

Optionally, the configuration signaling includes a correspondence between at least two measurement gap patterns and at least two measurement gap sharing rules.

Optionally, the at least two measurement gap patterns form a first list, the at least two measurement gap sharing rules form a second list, and the at least two measurement gap patterns in the first list are in a one-to-one correspondence with the at least two measurement gap sharing rules in the second list.

Optionally, in the configuration signaling, the measurement gap pattern and the measurement gap sharing rule are in a many-to-one correspondence.

Optionally, the configuration signaling further includes configuration information of the terminal for supporting per UE measurement gap and/or per FR measurement gap.

Optionally, the configuration signaling is MeasGapConfig configuration signaling.

Optionally, the configuration signaling further includes information about a plurality of measurement gap patterns configured for the terminal.

Optionally, the configuration signaling is gapconfig configuration signaling.

The configuration apparatus for a measurement gap sharing rule provided in this embodiment of this application can implement the processes implemented in the method embodiment of FIG 3, and a same technical effect can be achieved. To avoid repetition, details are not described herein again.

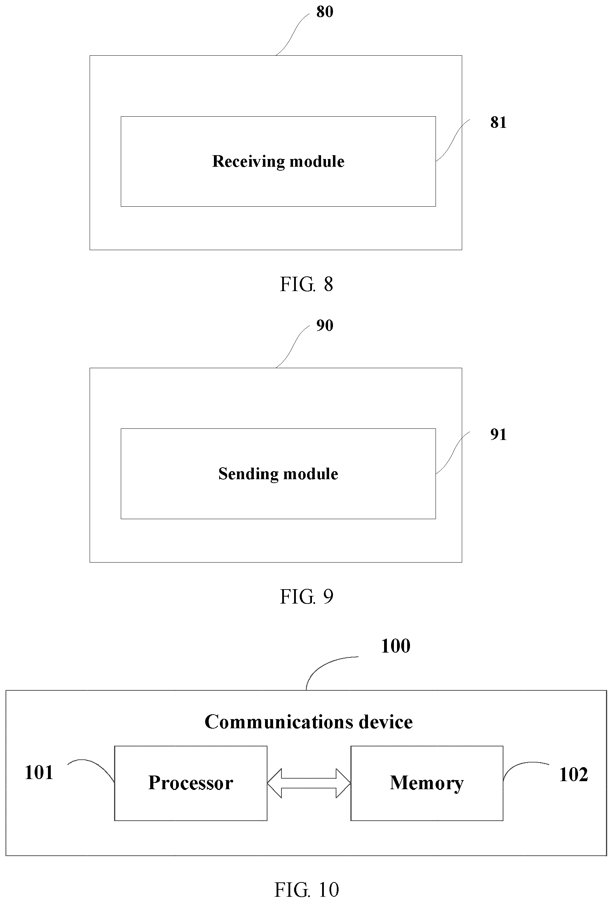

Referring to FIG 8, an embodiment of this application further provides a configuration apparatus 80 for a measurement gap sharing rule, including:
a receiving module 81, configured to receive configuration signaling sent by a network side device, where the configuration signaling is used to indicate an identity of a target measurement gap sharing rule corresponding to a measurement gap pattern configured for the terminal, and the identity of the target measurement gap sharing rule is able to indicate a proportion of a measurement gap occupied by a measurement object in inter-frequency measurement and a proportion of a measurement gap occupied by a measurement object in inter-RAT measurement.

Optionally, the identity of the target measurement gap sharing rule is represented by 2-bit information, and the apparatus further includes:
a first determining module, configured to query a first table based on the 2-bit information, to determine proportional distribution information corresponding to the 2-bit information, where
the first table includes a plurality of measurement gap sharing rule identities and proportional distribution information corresponding to each of the measurement gap sharing rule identities, the proportional distribution information includes a proportion of a measurement gap occupied by a measurement object in intra-frequency measurement, a proportion of a measurement gap occupied by a measurement object in inter-frequency measurement, and a proportion of a measurement gap occupied by a measurement object in inter-RAT measurement, in at least one piece of proportional distribution information, the proportion of a measurement gap occupied by a measurement object in intra-frequency measurement is X%, the proportion of a measurement gap occupied by a measurement object in inter-frequency measurement is M/(K+M)*(1-X%), and the proportion of a measurement gap occupied by a measurement object in inter-RAT measurement is K/(K+M)*(1-X%), K is the number of measurement objects in the inter-RAT measurement, and M is the number of measurement objects in the inter-frequency measurement.

Optionally, the identity of the target measurement gap sharing rule is represented by 3-bit information, and the apparatus further includes:
a second determining module, configured to query a second table based on the 3-bit information, to determine proportional distribution information corresponding to the 3-bit information, where
the second table includes a plurality of measurement gap sharing rule identities and proportional distribution information corresponding to each of the measurement gap sharing rule identities, and the proportional distribution information includes a proportion of a measurement gap occupied by a measurement object in intra-frequency measurement, a proportion of a measurement gap occupied by a measurement object in inter-frequency measurement, and a proportion of a measurement gap occupied by a measurement object in inter-RAT measurement.

Optionally, the identity of the target measurement gap sharing rule is represented by two pieces of 2-bit information, and the apparatus further includes:
a third determining module, configured to query a third table based on a first piece of 2-bit information, to determine a proportion of a measurement gap occupied by a measurement object in intra-frequency measurement; and
a fourth determining module, configured to query a fourth table based on a second piece of 2-bit information, to determine a proportion of a measurement gap occupied by a measurement object in inter-frequency measurement and a proportion of a measurement gap occupied by a measurement object in inter-RAT measurement, where
the third table includes a plurality of measurement gap sharing rule identities and proportional distribution information corresponding to each of the measurement gap sharing rule identities, and the proportional distribution information includes a proportion of a measurement gap occupied by a measurement object in intra-frequency measurement; and
the fourth table includes a plurality of measurement gap sharing rule identities and proportional distribution information corresponding to each of the measurement gap sharing rule identities, and the proportional distribution information includes a proportion of a measurement gap occupied by a measurement object in inter-frequency measurement and a proportion of a measurement gap occupied by a measurement object in inter-RAT measurement.

The configuration apparatus for a measurement gap sharing rule in this embodiment of this application may be an apparatus or an apparatus or electronic device with an operating system, or may be a component, an integrated circuit, or a chip in a terminal. The apparatus or electronic device may be a mobile terminal, or a non-mobile terminal. For example, the mobile terminal may include but is not limited to the foregoing listed types of terminals 11. The non-mobile terminal may be a server, a network attached storage (Network Attached Storage, NAS), a personal computer (personal computer, PC), a television (television, TV), a teller machine, or a self-service machine. This is not specifically limited in this embodiment of this application.

The configuration apparatus for a measurement gap sharing rule provided in this embodiment of this application can implement the processes implemented in the method embodiment of FIG 4, and a same technical effect can be achieved. To avoid repetition, details are not described herein again.

Referring to FIG 9, an embodiment of this application further provides a configuration apparatus 90 for a measurement gap sharing rule, including:
a sending module 91, configured to send configuration signaling to a terminal, where the configuration signaling is used to indicate an identity of a target measurement gap sharing rule corresponding to a measurement gap pattern configured for the terminal, and the identity of the target measurement gap sharing rule is able to indicate a proportion of a measurement gap occupied by a measurement object in inter-frequency measurement and a proportion of a measurement gap occupied by a measurement object in inter-RAT measurement.

Optionally, the identity of the target measurement gap sharing rule is represented by 2-bit information, and the 2-bit information is used to query a first table, where
the first table includes a plurality of measurement gap sharing rule identities and proportional distribution information corresponding to each of the measurement gap sharing rule identities, the proportional distribution information includes a proportion of a measurement gap occupied by a measurement object in intra-frequency measurement, a proportion of a measurement gap occupied by a measurement object in inter-frequency measurement, and a proportion of a measurement gap occupied by a measurement object in inter-RAT measurement, in at least one piece of proportional distribution information, the proportion of a measurement gap occupied by a measurement object in intra-frequency measurement is X%, the proportion of a measurement gap occupied by a measurement object in inter-frequency measurement is M/(K+M)*(1-X%), and the proportion of a measurement gap occupied by a measurement object in inter-RAT measurement is K/(K+M)*(1-X%), K is the number of measurement objects in the inter-RAT measurement, and M is the number of measurement objects in the inter-frequency measurement.

Optionally, the identity of the target measurement gap sharing rule is represented by 3-bit information, and the 3-bit information is used to query a second table, where
the second table includes a plurality of measurement gap sharing rule identities and proportional distribution information corresponding to each of the measurement gap sharing rule identities, and the proportional distribution information includes a proportion of a measurement gap occupied by a measurement object in intra-frequency measurement, a proportion of a measurement gap occupied by a measurement object in inter-frequency measurement, and a proportion of a measurement gap occupied by a measurement object in inter-RAT measurement.

Optionally, the identity of the target measurement gap sharing rule is represented by two pieces of 2-bit information;
the first piece of 2-bit information is used to query a third table, the third table includes a plurality of measurement gap sharing rule identities and proportional distribution information corresponding to each of the measurement gap sharing rule identities, and the proportional distribution information includes a proportion of a measurement gap occupied by a measurement object in intra-frequency measurement; and
the second piece of 2-bit information is used to query a fourth table, the fourth table includes a plurality of measurement gap sharing rule identities and proportional distribution information corresponding to each of the measurement gap sharing rule identities, and the proportional distribution information includes a proportion of a measurement gap occupied by a measurement object in inter-frequency measurement and a proportion of a measurement gap occupied by a measurement object in inter-RAT measurement.

The configuration apparatus for a measurement gap sharing rule provided in this embodiment of this application can implement the processes implemented in the method embodiment of FIG 5, and a same technical effect can be achieved. To avoid repetition, details are not described herein again.

As shown in FIG 10, an embodiment of this application further provides a communications device 100, including a processor 101, a memory 102, and a program or an instruction stored in the memory 102 and executable on the processor 101. For example, when the communications device 100 is a terminal, the program or the instruction is executed by the processor 101 to implement the processes of the embodiment of the configuration method for a measurement gap sharing rule implemented by the terminal, and a same technical effect can be achieved. When the communications device 100 is a network side device, the program or the instruction is executed by the processor 101 to implement the processes of the embodiment of the configuration method for a measurement gap sharing rule implemented by the network side device, and a same technical effect can be achieved. To avoid repetition, details are not described herein again.

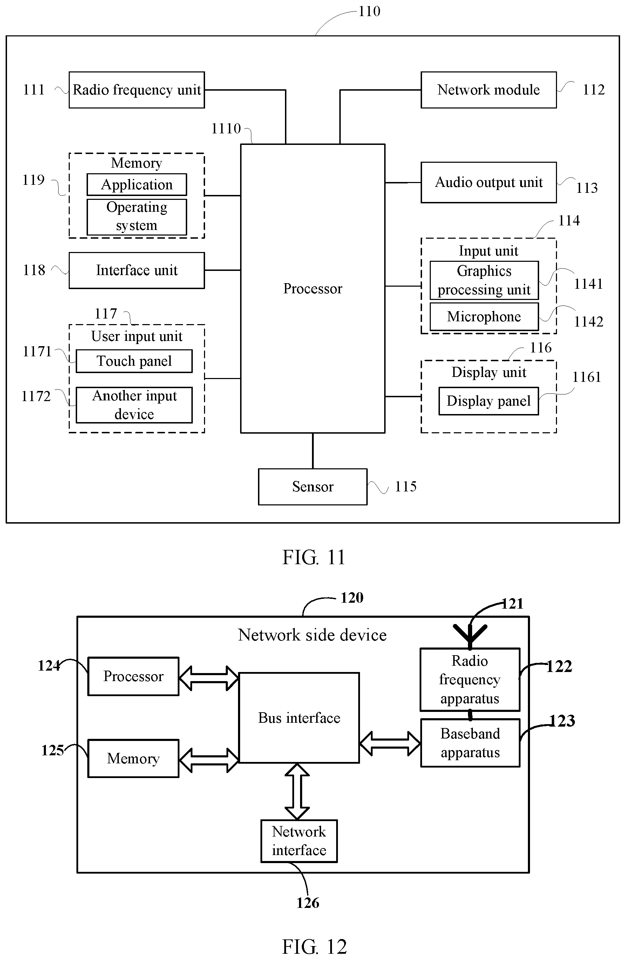

An embodiment of this application further provides a terminal, including a processor and a communications interface, where the communications interface is configured to receive configuration signaling sent by a network side device, and the configuration signaling includes a correspondence between at least one measurement gap pattern among a plurality of measurement gap patterns configured for the terminal and a measurement gap sharing rule; or the communications interface is configured to receive configuration signaling sent by a network side device, where the configuration signaling is used to indicate an identity of a target measurement gap sharing rule corresponding to a measurement gap pattern configured for the terminal, and the identity of the target measurement gap sharing rule is able to indicate a proportion of a measurement gap occupied by a measurement object in inter-frequency measurement and a proportion of a measurement gap occupied by a measurement object in inter-RAT measurement. This terminal embodiment corresponds to the foregoing method embodiment on the terminal side. Each implementation process and implementation of the foregoing method embodiment may be applicable to this terminal embodiment, and a same technical effect can be achieved. Specifically, FIG 11 is a schematic diagram of a hardware structure of a terminal according to an embodiment of this application.

A terminal 110 includes but is not limited to at least a part of components such as a radio frequency unit 111, a network module 112, an audio output unit 113, an input unit 114, a sensor 115, a display unit 116, a user input unit 117, an interface unit 118, a memory 119, and a processor 1110.

A person skilled in the art can understand that the terminal 110 may further include a power supply (such as a battery) that supplies power to each component. The power supply may be logically connected to the processor 1110 by using a power supply management system, to implement functions such as charging and discharging management, and power consumption management by using the power supply management system. The terminal structure shown in FIG 11 constitutes no limitation on the terminal, and the terminal may include more or fewer components than those shown in the figure, or combine some components, or have different component arrangements. Details are not described herein.

It should be understood that, in this embodiment of this application, the input unit 114 may include a graphics processing unit (Graphics Processing Unit, GPU) 1141 and a microphone 1142, and the graphics processing unit 1141 processes image data of a still picture or a video obtained by an image capture apparatus (such as a camera) in a video capture mode or an image capture mode. The display unit 116 may include a display panel 1161. Optionally, the display panel 1161 may be configured in a form such as a liquid crystal display or an organic light-emitting diode. The user input unit 117 includes a touch panel 1171 and another input device 1172. The touch panel 1171 is also referred to as a touchscreen. The touch panel 1171 may include two parts: a touch detection apparatus and a touch controller. The another input device 1172 may include but is not limited to a physical keyboard, a functional button (such as a volume control button or a power on/off button), a trackball, a mouse, and a joystick. Details are not described herein.

In this embodiment of this application, the radio frequency unit 111 receives downlink data from a network side device and then sends the downlink data to the processor 1110 for processing; and sends uplink data to the network side device. Usually, the radio frequency unit 111 includes but is not limited to an antenna, at least one amplifier, a transceiver, a coupler, a low noise amplifier, a duplexer, and the like.

The memory 119 may be configured to store a software program or an instruction and various data. The memory 119 may mainly include a program or instruction storage area and a data storage area. The program or instruction storage area may store an operating system, and an application or an instruction required by at least one function (for example, a sound playing function or an image playing function). In addition, the memory 119 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1110 may include one or more processing units. Optionally, an application processor and a modem processor may be integrated into the processor 1110. The application processor mainly processes an operating system, a user interface, an application, an instruction, or the like. The modem processor mainly processes wireless communication, for example, a baseband processor. It can be understood that, alternatively, the modem processor may not be integrated into the processor 1110.

The radio frequency unit 111 is configured to receive configuration signaling sent by a network side device, where the configuration signaling includes a correspondence between at least one measurement gap pattern among a plurality of measurement gap patterns configured for the terminal and a measurement gap sharing rule.

Optionally, in the configuration signaling, the measurement gap pattern and the measurement gap sharing rule are in a one-to-one correspondence.

Optionally, among the plurality of measurement gap patterns configured for the terminal, different measurement gap patterns correspond to different measurement gap sharing rules.

Optionally, the configuration signaling includes a correspondence between one measurement gap pattern and one measurement gap sharing rule.

Optionally, the configuration signaling includes a correspondence between at least two measurement gap patterns and at least two measurement gap sharing rules.

Optionally, the at least two measurement gap patterns form a first list, the at least two measurement gap sharing rules form a second list, and the at least two measurement gap patterns in the first list are in a one-to-one correspondence with the at least two measurement gap sharing rules in the second list.

Optionally, in the configuration signaling, the measurement gap pattern and the measurement gap sharing rule are in a many-to-one correspondence.

Optionally, the configuration signaling further includes configuration information of the terminal for supporting per UE measurement gap and/or per FR measurement gap.

Optionally, the configuration signaling is MeasGapConfig configuration signaling.

Optionally, the configuration signaling further includes information about a plurality of measurement gap patterns configured for the terminal.

Optionally, the configuration signaling is gapconfig configuration signaling.

In this embodiment of this application, when the plurality of measurement gap patterns are configured for the terminal, the configuration signaling is used to configure, for the terminal, the correspondence between at least one measurement gap pattern among a plurality of measurement gap patterns of the terminal and the measurement gap sharing rule, so as to achieve accurate RRM measurement.

Alternatively,
the radio frequency unit 111 is configured to receive configuration signaling sent by a network side device, where the configuration signaling is used to indicate an identity of a target measurement gap sharing rule corresponding to a measurement gap pattern configured for the terminal, and the identity of the target measurement gap sharing rule is able to indicate a proportion of a measurement gap occupied by a measurement object in inter-frequency measurement and a proportion of a measurement gap occupied by a measurement object in inter-RAT measurement.

Optionally, the identity of the target measurement gap sharing rule is represented by 2-bit information, and the processor 1110 is configured to query a first table based on the 2-bit information, to determine proportional distribution information corresponding to the 2-bit information, where
the first table includes a plurality of measurement gap sharing rule identities and proportional distribution information corresponding to each of the measurement gap sharing rule identities, the proportional distribution information includes a proportion of a measurement gap occupied by a measurement object in intra-frequency measurement, a proportion of a measurement gap occupied by a measurement object in inter-frequency measurement, and a proportion of a measurement gap occupied by a measurement object in inter-RAT measurement, in at least one piece of proportional distribution information, the proportion of a measurement gap occupied by a measurement object in intra-frequency measurement is X%, the proportion of a measurement gap occupied by a measurement object in inter-frequency measurement is M/(K+M)*(1-X%), and the proportion of a measurement gap occupied by a measurement object in inter-RAT measurement is K/(K+M)*(1-X%), K is the number of measurement objects in the inter-RAT measurement, and M is the number of measurement objects in the inter-frequency measurement.

Optionally, the identity of the target measurement gap sharing rule is represented by 3-bit information, and the processor 1110 is configured to query a second table based on the 3-bit information, to determine proportional distribution information corresponding to the 3-bit information, where
the second table includes a plurality of measurement gap sharing rule identities and proportional distribution information corresponding to each of the measurement gap sharing rule identities, and the proportional distribution information includes a proportion of a measurement gap occupied by a measurement object in intra-frequency measurement, a proportion of a measurement gap occupied by a measurement object in inter-frequency measurement, and a proportion of a measurement gap occupied by a measurement object in inter-RAT measurement.

Optionally, the identity of the target measurement gap sharing rule is represented by two pieces of 2-bit information, and the processor 1110 is configured to query a third table based on a first piece of 2-bit information, to determine a proportion of a measurement gap occupied by a measurement object in intra-frequency measurement; and
the processor 1110 is configured to query a fourth table based on a second piece of 2-bit information, to determine a proportion of a measurement gap occupied by a measurement object in inter-frequency measurement and a proportion of a measurement gap occupied by a measurement object in inter-RAT measurement, where
the third table includes a plurality of measurement gap sharing rule identities and proportional distribution information corresponding to each of the measurement gap sharing rule identities, and the proportional distribution information includes a proportion of a measurement gap occupied by a measurement object in intra-frequency measurement; and
the fourth table includes a plurality of measurement gap sharing rule identities and proportional distribution information corresponding to each of the measurement gap sharing rule identities, and the proportional distribution information includes a proportion of a measurement gap occupied by a measurement object in inter-frequency measurement and a proportion of a measurement gap occupied by a measurement object in inter-RAT measurement.

In this embodiment of this application, the terminal is configured with the identity of the target measurement gap sharing rule corresponding to the measurement gap pattern. The identity of the target measurement gap sharing rule is able to indicate a proportion of a measurement gap occupied by a measurement object in inter-frequency measurement and a proportion of a measurement gap occupied by a measurement object in inter-RAT measurement, so that proportion distribution between the inter-frequency measurement and the inter-RAT measurement can be learned of, and accurate RRM measurement can be realized.

An embodiment of this application further provides a network side device, including a processor and a communications interface, where the communications interface is configured to send configuration signaling to a terminal, and the configuration signaling includes a correspondence between at least one measurement gap pattern among a plurality of measurement gap patterns configured for the terminal and a measurement gap sharing rule; or the communications interface is configured to send configuration signaling to a terminal, where the configuration signaling is used to indicate an identity of a target measurement gap sharing rule corresponding to a measurement gap pattern configured for the terminal, and the identity of the target measurement gap sharing rule is able to indicate a proportion of a measurement gap occupied by a measurement object in inter-frequency measurement and a proportion of a measurement gap occupied by a measurement object in inter-RAT measurement. This network side device embodiment corresponds to the foregoing method embodiment on the network side device. Each implementation process and implementation of the foregoing method embodiment may be applicable to this network side device embodiment, and a same technical effect can be achieved.

Specifically, an embodiment of this application further provides a network side device. As shown in FIG 12, the network side device 1200 includes an antenna 121, a radio frequency apparatus 122, and a baseband apparatus 123. The antenna 121 is connected to the radio frequency apparatus 122. In an uplink direction, the radio frequency apparatus 122 receives information by using the antenna 121, and sends the received information to the baseband apparatus 123 for processing. In a downlink direction, the baseband apparatus 123 processes to-be-sent information, and sends the information to the radio frequency apparatus 122. The radio frequency apparatus 122 processes the received information and then sends the information by using the antenna 121.

The frequency band processing apparatus may be located in the baseband apparatus 123. The method performed by the network side device in the foregoing embodiment may be implemented in the baseband apparatus 123. The baseband apparatus 123 includes a processor 124 and a memory 125.

The baseband apparatus 123 may include, for example, at least one baseband board, where a plurality of chips are disposed on the baseband board. As shown in FIG 12, one chip is, for example, the processor 124, which is connected to the memory 125, so as to invoke a program in the memory 125 to perform operations of the network device shown in the foregoing method embodiment.

The baseband apparatus 123 may further include a network interface 126, configured to exchange information with the radio frequency apparatus 122. For example, the interface is a common public radio interface (common public radio interface, CPRI for short).

Specifically, the network side device in this embodiment of this application further includes an instruction or a program that is stored in the memory 125 and that can be run on the processor 124. The processor 124 invokes the instruction or the program in the memory 125 to perform the method performed by the modules shown in FIG 7 or FIG 9, and a same technical effect is achieved. To avoid repetition, details are not described herein again.

An embodiment of this application further provides a readable storage medium, where the readable storage medium stores a program or an instruction, and when the program or the instruction is executed by a processor, the processes of the embodiment of the configuration method for a measurement gap sharing rule are implemented, and a same technical effect can be achieved. To avoid repetition, details are not described herein again.

The processor is a processor in the terminal in the foregoing embodiment. The readable storage medium includes a computer-readable storage medium such as a computer read-only memory (Read-Only Memory, ROM), a random access memory (Random Access Memory, RAM), a magnetic disk, an optical disc, or the like.

An embodiment of this application further provides a chip. The chip includes a processor and a communications interface, the communications interface is coupled to the processor, and the processor is configured to run a program or an instruction, to implement the processes of the embodiment of the configuration method for a measurement gap sharing rule, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air-conditioner, a network device, or the like) to perform the method described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A configuration method for a measurement gap sharing rule, comprising:
receiving, by a terminal, configuration signaling sent by a network side device, wherein the configuration signaling comprises a correspondence between at least one measurement gap pattern among a plurality of measurement gap patterns configured for the terminal and a measurement gap sharing rule.

2. The method according to claim 1, wherein in the configuration signaling, the measurement gap pattern and the measurement gap sharing rule are in a one-to-one correspondence.

3. The method according to claim 2, wherein among the plurality of measurement gap patterns configured for the terminal, different measurement gap patterns correspond to different measurement gap sharing rules.

4. The method according to claim 2, wherein the configuration signaling comprises a correspondence between one measurement gap pattern and one measurement gap sharing rule.

5. The method according to claim 2, wherein the configuration signaling comprises a correspondence between at least two measurement gap patterns and at least two measurement gap sharing rules.

6. The method according to claim 5, wherein the at least two measurement gap patterns form a first list, the at least two measurement gap sharing rules form a second list, and the at least two measurement gap patterns in the first list are in a one-to-one correspondence with the at least two measurement gap sharing rules in the second list.

7. The method according to claim 1, wherein in the configuration signaling, the measurement gap pattern and the measurement gap sharing rule are in a many-to-one correspondence.

8. The method according to claim 1, wherein the configuration signaling further comprises configuration information of the terminal for supporting per UE measurement gap and/or per FR measurement gap.

9. The method according to claim 8, wherein the configuration signaling is MeasGapConfig configuration signaling.

10. The method according to claim 1, wherein the configuration signaling further comprises information about a plurality of measurement gap patterns configured for the terminal.

11. The method according to claim 10, wherein the configuration signaling is gapconfig configuration signaling.

12. A configuration method for a measurement gap sharing rule, comprising:
sending, by a network side device, configuration signaling to a terminal, wherein the configuration signaling comprises a correspondence between at least one measurement gap pattern among a plurality of measurement gap patterns configured for the terminal and a measurement gap sharing rule.

13. The method according to claim 12, wherein in the configuration signaling, the measurement gap pattern and the measurement gap sharing rule are in a one-to-one correspondence.

14. The method according to claim 13, wherein among the plurality of measurement gap patterns configured for the terminal, different measurement gap patterns correspond to different measurement gap sharing rules.

15. The method according to claim 13, wherein the configuration signaling comprises a correspondence between one measurement gap pattern and one measurement gap sharing rule.

16. The method according to claim 13, wherein the configuration signaling comprises a correspondence between at least two measurement gap patterns and at least two measurement gap sharing rules.

17. The method according to claim 16, wherein the at least two measurement gap patterns form a first list, the at least two measurement gap sharing rules form a second list, and the at least two measurement gap patterns in the first list are in a one-to-one correspondence with the at least two measurement gap sharing rules in the second list.

18. The method according to claim 12, wherein in the configuration signaling, the measurement gap pattern and the measurement gap sharing rule are in a many-to-one correspondence.

19. The method according to claim 12, wherein the configuration signaling further comprises configuration information of the terminal for supporting per UE measurement gap and/or per FR measurement gap.

20. The method according to claim 19, wherein the configuration signaling is MeasGapConfig configuration signaling.

21. The method according to claim 12, wherein the configuration signaling further comprises information about a plurality of measurement gap patterns configured for the terminal.

22. The method according to claim 21, wherein the configuration signaling is gapconfig configuration signaling.

23. A configuration method for a measurement gap sharing rule, comprising:
receiving, by a terminal, configuration signaling sent by a network side device, wherein the configuration signaling is used to indicate an identity of a target measurement gap sharing rule corresponding to a measurement gap pattern configured for the terminal, and the identity of the target measurement gap sharing rule is able to indicate a proportion of a measurement gap occupied by a measurement object in inter-frequency measurement and a proportion of a measurement gap occupied by a measurement object in inter-RAT measurement.

24. The method according to claim 23, wherein the identity of the target measurement gap sharing rule is represented by 2-bit information, and after the receiving, by a terminal, configuration signaling sent by a network side device, the method further comprises:
querying, by the terminal, a first table based on the 2-bit information, to determine proportional distribution information corresponding to the 2-bit information, wherein
the first table comprises a plurality of measurement gap sharing rule identities and proportional distribution information corresponding to each of the measurement gap sharing rule identities, the proportional distribution information comprises a proportion of a measurement gap occupied by a measurement object in intra-frequency measurement, a proportion of a measurement gap occupied by a measurement object in inter-frequency measurement, and a proportion of a measurement gap occupied by a measurement object in inter-RAT measurement, in at least one piece of proportional distribution information, the proportion of a measurement gap occupied by a measurement object in intra-frequency measurement is X%, the proportion of a measurement gap occupied by a measurement object in inter-frequency measurement is M/(K+M)*(1-X%), and the proportion of a measurement gap occupied by a measurement object in inter-RAT measurement is K/(K+M)*(1-X%), K is the number of measurement objects in the inter-RAT measurement, and M is the number of measurement objects in the inter-frequency measurement.

25. The method according to claim 23, the identity of the target measurement gap sharing rule is represented by 3-bit information, and after the receiving, by a terminal, configuration signaling sent by a network side device, the method further comprises:
querying, by the terminal, a second table based on the 3-bit information, to determine proportional distribution information corresponding to the 3-bit information, wherein
the second table comprises a plurality of measurement gap sharing rule identities and proportional distribution information corresponding to each of the measurement gap sharing rule identities, and the proportional distribution information comprises a proportion of a measurement gap occupied by a measurement object in intra-frequency measurement, a proportion of a measurement gap occupied by a measurement object in inter-frequency measurement, and a proportion of a measurement gap occupied by a measurement object in inter-RAT measurement.

26. The method according to claim 23, wherein the identity of the target measurement gap sharing rule is represented by two pieces of 2-bit information; and
after the receiving, by a terminal, configuration signaling sent by a network side device, the method further comprises:
querying, by the terminal, a third table based on a first piece of 2-bit information, to determine a proportion of a measurement gap occupied by a measurement object in intra-frequency measurement; and
querying, by the terminal, a fourth table based on a second piece of 2-bit information, to determine a proportion of a measurement gap occupied by a measurement object in inter-frequency measurement and a proportion of a measurement gap occupied by a measurement object in inter-RAT measurement, wherein
the third table comprises a plurality of measurement gap sharing rule identities and proportional distribution information corresponding to each of the measurement gap sharing rule identities, and the proportional distribution information comprises a proportion of a measurement gap occupied by a measurement object in intra-frequency measurement; and
the fourth table comprises a plurality of measurement gap sharing rule identities and proportional distribution information corresponding to each of the measurement gap sharing rule identities, and the proportional distribution information comprises a proportion of a measurement gap occupied by a measurement object in inter-frequency measurement and a proportion of a measurement gap occupied by a measurement object in inter-RAT measurement.

27. A configuration method for a measurement gap sharing rule, comprising:
sending, by a network side device, configuration signaling to a terminal, wherein the configuration signaling is used to indicate an identity of a target measurement gap sharing rule corresponding to a measurement gap pattern configured for the terminal, and the identity of the target measurement gap sharing rule is able to indicate a proportion of a measurement gap occupied by a measurement object in inter-frequency measurement and a proportion of a measurement gap occupied by a measurement object in inter-RAT measurement.

28. The method according to claim 27, wherein the identity of the target measurement gap sharing rule is represented by 2-bit information, and the 2-bit information is used to query a first table, wherein
the first table comprises a plurality of measurement gap sharing rule identities and proportional distribution information corresponding to each of the measurement gap sharing rule identities, the proportional distribution information comprises a proportion of a measurement gap occupied by a measurement object in intra-frequency measurement, a proportion of a measurement gap occupied by a measurement object in inter-frequency measurement, and a proportion of a measurement gap occupied by a measurement object in inter-RAT measurement, in at least one piece of proportional distribution information, the proportion of a measurement gap occupied by a measurement object in intra-frequency measurement is X%, the proportion of a measurement gap occupied by a measurement object in inter-frequency measurement is M/(K+M)*(1-X%), and the proportion of a measurement gap occupied by a measurement object in inter-RAT measurement is K/(K+M)*(1-X%), K is the number of measurement objects in the inter-RAT measurement, and M is the number of measurement objects in the inter-frequency measurement.

29. The method according to claim 27, wherein the identity of the target measurement gap sharing rule is represented by 3-bit information, and the 3-bit information is used to query a second table, wherein
the second table comprises a plurality of measurement gap sharing rule identities and proportional distribution information corresponding to each of the measurement gap sharing rule identities, and the proportional distribution information comprises a proportion of a measurement gap occupied by a measurement object in intra-frequency measurement, a proportion of a measurement gap occupied by a measurement object in inter-frequency measurement, and a proportion of a measurement gap occupied by a measurement object in inter-RAT measurement.

30. The method according to claim 27, wherein the identity of the target measurement gap sharing rule is represented by two pieces of 2-bit information;
a first piece of 2-bit information is used to query a third table, the third table comprises a plurality of measurement gap sharing rule identities and proportional distribution information corresponding to each of the measurement gap sharing rule identities, and the proportional distribution information comprises a proportion of a measurement gap occupied by a measurement object in intra-frequency measurement; and
a second piece of 2-bit information is used to query a fourth table, the fourth table comprises a plurality of measurement gap sharing rule identities and proportional distribution information corresponding to each of the measurement gap sharing rule identities, and the proportional distribution information comprises a proportion of a measurement gap occupied by a measurement object in inter-frequency measurement and a proportion of a measurement gap occupied by a measurement object in inter-RAT measurement.

31. A configuration apparatus for a measurement gap sharing rule, comprising:
a receiving module, configured to receive configuration signaling sent by a network side device, wherein the configuration signaling comprises a correspondence between at least one measurement gap pattern among a plurality of measurement gap patterns configured for the terminal and a measurement gap sharing rule.

32. A configuration apparatus for a measurement gap sharing rule, comprising:
a sending module, configured to send configuration signaling to a terminal, wherein the configuration signaling comprises a correspondence between at least one measurement gap pattern among a plurality of measurement gap patterns configured for the terminal and a measurement gap sharing rule.

33. A configuration apparatus for a measurement gap sharing rule, comprising:
a receiving module, configured to receive configuration signaling sent by a network side device, wherein the configuration signaling is used to indicate an identity of a target measurement gap sharing rule corresponding to a measurement gap pattern configured for the terminal, and the identity of the target measurement gap sharing rule is able to indicate a proportion of a measurement gap occupied by a measurement object in inter-frequency measurement and a proportion of a measurement gap occupied by a measurement object in inter-RAT measurement.

34. A configuration apparatus for a measurement gap sharing rule, comprising:
a sending module, configured to send configuration signaling to a terminal, wherein the configuration signaling is used to indicate an identity of a target measurement gap sharing rule corresponding to a measurement gap pattern configured for the terminal, and the identity of the target measurement gap sharing rule is able to indicate a proportion of a measurement gap occupied by a measurement object in inter-frequency measurement and a proportion of a measurement gap occupied by a measurement object in inter-RAT measurement.

35. A terminal, comprising a processor, a memory, and a program or an instruction stored in the memory and executable on the processor, wherein when the program or the instruction is executed by the processor, steps of the configuration method for a measurement gap sharing rule according to any one of claims 1 to 11 are implemented, or when the program or the instruction is executed by the processor, steps of the configuration method for a measurement gap sharing rule according to any one of claims 23 to 26 are implemented.

36. A network side device, comprising a processor, a memory, and a program or an instruction stored in the memory and executable on the processor, wherein when the program or the instruction is executed by the processor, steps of the configuration method for a measurement gap sharing rule according to any one of claims 12 to 22 are implemented, or when the program or the instruction is executed by the processor, steps of the configuration method for a measurement gap sharing rule according to any one of claims 27 to 30 are implemented.

37. A readable storage medium, wherein the readable storage medium stores a program or an instruction, and when the program or the instruction is executed by a processor, steps of the configuration method for a measurement gap sharing rule according to any one of claims 1 to 11 are implemented; steps of the configuration method for a measurement gap sharing rule according to any one of claims 12 to 22 are implemented; steps of the configuration method for a measurement gap sharing rule according to any one of claims 23 to 26 are implemented; or steps of the configuration method for a measurement gap sharing rule according to any one of claims 27 to 30 are implemented.
